# EUROPEAN PATENT APPLICATION

(11) **EP 4 768 165 A1**
(43) Date of publication of application: **01.07.2026**
(21) Application number: 25752511.3
(22) Date of filing: 31.01.2025
(51) Int. Cl.: B23K 20/10, B06B 1/02

(54) **ULTRASONIC WELDING DEVICE**

(30) Priority: 08.02.2024 KR 20240019386
(71) Applicant: LG Energy Solution, Ltd., Seoul 07335 (KR)
(72) Inventor: KIM, Seong Jin, Daejeon 34122 (KR)
(74) Representative: Plasseraud IP
(86) International application number: PCT/KR2025/099157
(87) International publication number: WO 2025/170403

(57) **Abstract**

An ultrasonic welding apparatus is provided, including: a support having a concave part; an ultrasonic stack provided on the support; and an adjustment part housing surrounding the ultrasonic stack and seated in the concave part, wherein the support and the adjustment part housing are configured such that a spacing therebetween is adjustable at one side.

## Description

### [Technical Field]

The present disclosure relates to an ultrasonic welding apparatus, and more particularly to an ultrasonic welding apparatus capable of easily and precisely adjusting the horizontal position of a horn relative to an anvil.

This application claims the benefit of priority from Korean Patent Application No. 10-2024-0019386, filed on February 08, 2024, the entire contents disclosed therein are incorporated by reference into this disclosure.

### [Background]

Secondary batteries are batteries that can be charged and discharged, unlike primary batteries, which cannot be charged, and are widely used in electronic devices such as cell phones, laptops, and camcorders, or in electric vehicles. In particular, lithium secondary batteries have a larger capacity than nickel-cadmium batteries or nickel metal hydride batteries and have high energy density per unit weight, so the utilization is rapidly increasing.

Various manufacturing methods have been proposed and applied to manufacture secondary batteries, and various efforts are being made to reduce the defect rate of the products.

### [Summary]

### [Technical Problem]

The technical problem to be solved by the present disclosure is to provide an ultrasonic welding apparatus capable of easily and precisely adjusting the horizontal position of a horn relative to an anvil.

### [Technical Solution]

To achieve the technical problem, the present disclosure provides an ultrasonic welding apparatus comprising: a support having a concave part; an ultrasonic stack provided on the support; and an adjustment part housing surrounding the ultrasonic stack and seated in the concave part, wherein the support and the adjustment part housing are configured such that a spacing therebetween is adjustable at one side.

In some embodiments, the adjustment part housing may include a lower housing and an upper housing, and the lower housing and the upper housing may be configured to cooperate with each other to surround side surfaces of the ultrasonic stack.

In some embodiments, the lower housing may include a lower surface corresponding to a concave surface of the concave part of the support.

In some embodiments, the upper housing and the lower housing may be fastened by housing fastening bolts.

In some embodiments, the adjustment part housing may be configured to rotate with respect to a rotation axis by adjusting the spacing between the support and the adjustment part housing.

In some embodiments, the rotation axis may be substantially parallel to an extension direction of the ultrasonic stack.

In some embodiments, the adjustment part housing includes through holes respectively provided on both sides with the ultrasonic stack therebetween, and the ultrasonic welding apparatus may further include a first bolt fastened to the support by penetrating the through hole provided in the adjustment part housing at one side of the ultrasonic stack and a second bolt fastened to the support by penetrating the through hole provided in the adjustment part housing at the other side of the ultrasonic stack.

In some embodiments, a first compression spring may be interposed between a head part of the first bolt and the adjustment part housing, and a second compression spring may be interposed between a head part of the second bolt and the adjustment part housing.

In some embodiments, a spring constant of the first compression spring and a spring constant of the second compression spring may be different from each other.

In some embodiments, the spring constant of the first compression spring may be greater than the spring constant of the second compression spring.

In some embodiments, the ultrasonic welding apparatus may further include an adjustment bolt capable of contacting the adjustment part housing while penetrating the support.

In some embodiments, the adjustment bolt may be configured to be capable of advancing in a direction that compresses the first compression spring by its own rotation.

Another aspect of the present disclosure provides an ultrasonic welding apparatus comprising: an ultrasonic stack; an adjustment part housing surrounding the ultrasonic stack and having a housing protrusion part on one side; a support having a support protrusion part corresponding to the one side of the adjustment part housing and provided to at least partially support the adjustment part housing; and an adjustment bolt configured to penetrate the support protrusion part and contact the housing protrusion part, wherein the adjustment bolt is configured to adjust a distance between the support protrusion part and the housing protrusion part.

In some embodiments, the adjustment part housing may be configured to rotate at a predetermined angle with respect to the rotation axis by advance of the adjustment bolt.

In some embodiments, the ultrasonic stack may include a vibration generator and a horn.

### [Advantageous Effects]

The ultrasonic welding apparatus according to embodiments of the present disclosure can easily and precisely adjust the horizontal position of the horn relative to the anvil, thereby significantly improving the quality of welding.

The technical effects that can be obtained in exemplary embodiments of the present disclosure are not limited to the above-described effects, and other effects not mentioned can be clearly understood by a person skilled in the art from the description of the disclosure described below. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view of an ultrasonic welding apparatus according to one embodiment of the present disclosure.
FIG. 2 is an exploded perspective view illustrating a major part of an ultrasonic welding apparatus according to one embodiment of the present disclosure.
FIG. 3 is a side view of the ultrasonic welding apparatus.
FIG. 4 is a partial enlarged view of portion A of FIG. 3.
FIG. 5 is an exploded perspective view illustrating a major part of an ultrasonic welding apparatus according to another embodiment of the present disclosure.

### [Detailed Description]

Hereinafter, preferred embodiments of the present disclosure concept will be described in detail with reference to the accompanying drawings. However, embodiments of the present disclosure concept may be modified in various different forms, and it should not be interpreted that the scope of the present disclosure concept is limited by the embodiments described below. It is preferred that the embodiments of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific embodiments and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some embodiments are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, embodiments of the present disclosure should not be construed as limited to the specific forms of the areas shown herein, and should include, for example, variations in form resulting from manufacturing processes. All terms "and/or" used herein are included each and every combination of one or more of the components mentioned. In addition, the term "substrate" as used herein may refer to the substrate itself, or to a stacked structure including the substrate and any predetermined layers or films, etc. formed on the surface thereof. In addition, the term "surface of the substrate" as used herein may refer to the exposed surface of the substrate itself, or to the outer surface of a predetermined layer or film, etc. formed on the substrate.

### (first embodiment)

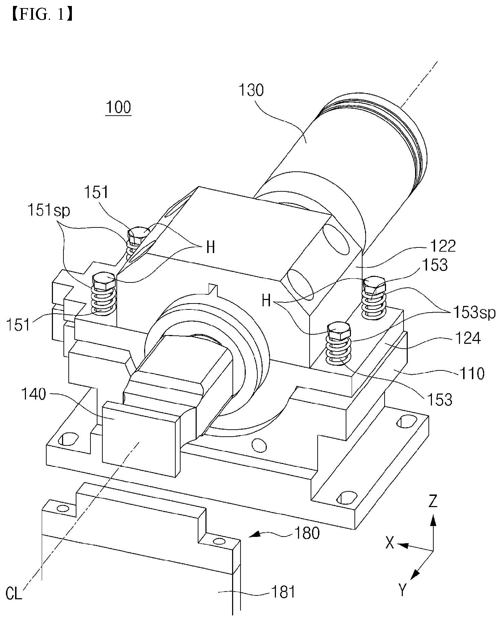

FIG. 1 is a perspective view of an ultrasonic welding apparatus 100 according to one embodiment of the present disclosure.

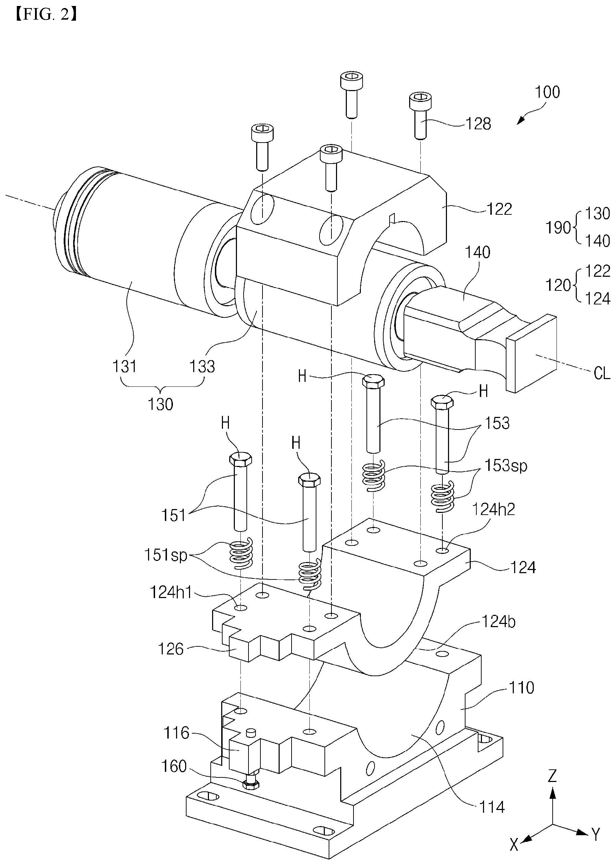

FIG. 2 is an exploded perspective view illustrating a major part of an ultrasonic welding apparatus 100 according to one embodiment of the present disclosure.

Referring to FIGS. 1 and 2, the ultrasonic welding apparatus 100 may include a support 110 having a concave part 114; an ultrasonic stack 190 provided on the support 110; and an adjustment part housing 120 surrounding the ultrasonic stack 190 and seated in the concave part 114.

The ultrasonic stack 190 may include a vibration generator 130 and a horn 140. The vibration generator 130 may include a vibrator 131 that converts electrical energy into mechanical vibration energy, and a booster 133 that reduces or amplifies the amplitude of the vibrator 131. The vibration energy of the booster 133 may be transmitted to the horn 140 and used to fuse a workpiece.

The ultrasonic welding apparatus 100 may weld the work piece by frictional heat by interposing the workpiece between the anvil 180 and the horn 140, then vibrating the horn 140 while applying pressure thereto.

The anvil 180 may include an anvil base 181. An upper surface of the anvil base 181 may extend substantially horizontally. The anvil 180 may support the workpiece pressurized by the horn 140 from below. In some embodiments, an upper portion of the anvil 180 may be configured to be detachable from the anvil base 181.

A vertical distance between the anvil 180 and the horn 140 may be adjusted. In other words, the vertical distance between them may be adjusted by adjusting the relative distance between the anvil 180 and the horn 140. In some embodiments, the relative distance between them may be adjusted by at least one of the anvil 180 and the horn 140 moving in a vertical direction. For this, at least one of the anvil 180 and the horn 140 may be configured to be elevatable.

The horn 140 may be positioned above the anvil 180. In some embodiments, the horn 140 may have a rectangular plate form, and the bottom of the horn 140 may extend long in one direction (for example, X-axis direction). The workpiece may be pressurized and welded between the bottom of the horn 140 and the anvil 180.

In some embodiments, at least one of a bottom surface of the horn 140 and the upper surface of the anvil 180 may be provided with protrusions that improve contact with the workpiece. In this case, marks corresponding to the protrusions may remain on the workpiece after welding is completed.

To ensure excellent welding quality, the upper surface of the anvil 180 and the bottom surface of the horn 140 should be maintained parallel to each other. The ultrasonic welding apparatus 100 according to embodiments of the present disclosure is configured to be capable of adjusting the horizontal position of the bottom surface of the horn 140 corresponding to the upper surface of the anvil 180. Here, the horizontal position of the bottom surface of the horn 140 may mean an absolute horizontal position associated with an absolute reference (for example, the direction of gravity), but may also mean a relative horizontal position with respect to the upper surface of the anvil 180.

As described above, the vibration generator 130 may include the vibrator 131 and the booster 133. The vibrator 131 and the booster 133 may generally have a cylindrical shape. The vibrator 131, the booster 133, and the horn 140 may be sequentially arranged in a straight line in a predetermined direction (for example, Y-axis direction), and the ultrasonic stack 190 may extend along the predetermined direction. Furthermore, the vibrator 131, the booster 133, and the horn 140 may have a common central axis.

The adjustment part housing 120 may surround the ultrasonic stack 190. In some embodiments, the adjustment part housing 120 may include an upper housing 122 and a lower housing 124 that are fastened to each other with the ultrasonic stack 190 therebetween. The upper housing 122 and the lower housing 124 may be configured to cooperate with each other to at least partially surround side surfaces of the ultrasonic stack 190. In some embodiments, the adjustment part housing 120 may be configured to surround side surfaces of the vibration generator 130.

The adjustment part housing 120 may further include a fastening member 128 that fastens the upper housing 122 and the lower housing 124. In some embodiments, the fastening member 128 may be housing fastening bolts. The upper housing 122 may have through holes through which the housing fastening bolts can penetrate. The lower housing 124 may have fastening holes corresponding to the through holes, with which the housing fastening bolts may be engaged.

The support 110 may have a concave part 114 that can partially accommodate the adjustment part housing 120. In some embodiments, the concave part 114 may have an arc-shaped cross-section. A lower portion of the adjustment part housing 120 may have a shape suitable for being seated in the concave part 114. In other words, a lower surface 124b of the adjustment part housing 120 may have a shape corresponding to a concave surface of the concave part 114. In some embodiments, the shape corresponding to the concave surface may be a complementary shape to the concave surface.

In some embodiments, the support 110 and the adjustment part housing 120 may be configured such that a spacing therebetween is adjustable at one side. By adjusting the spacing between the support 110 and the adjustment part housing 120 at one side, the adjustment part housing 120 may be rotated with respect to the support 110. By rotating the adjustment part housing 120 with respect to the support 110, the horizontal position of the horn 140 may be adjusted.

The rotation axis about which the adjustment part housing 120 rotates may be substantially parallel to an extension direction of the ultrasonic stack 190. In some embodiments, the vibrator 131, the booster 133, and the horn 140 have a common central axis, and the rotation axis may coincide with the central axis.

The adjustment part housing 120 may have through holes 124h1, 124h2 respectively provided on both sides with the ultrasonic stack 190 therebetween. Specifically, the adjustment part housing 120 may have first through holes 124h1 through which first bolts 151 can penetrate at one side of the ultrasonic stack 190. Also, the adjustment part housing 120 may have second through holes 124h2 through which second bolts 153 can penetrate at the other side of the ultrasonic stack 190. The first bolts 151 may penetrate the first through holes 124h1 and be fastened to the support 110. Also, the second bolts 153 may penetrate the second through holes 124h2 and be fastened to the support 110.

The first bolts 151 may penetrate the first through holes 124h1 but may not be threadedly engaged to the adjustment part housing 120. Also, the second bolts 153 may penetrate the second through holes 124h2 but may not be threadedly engaged to the adjustment part housing 120. In this case, the adjustment part housing 120 may move in up and down direction (for example, Z-axis direction) along the stems of the first bolts 151.

In FIGS. 1 and 2, the first through holes 124h1 and the second through holes 124h2 are shown as being provided in the lower housing 124, but the present disclosure is not limited thereto. In some embodiments, the through holes may be provided in the upper housing 122.

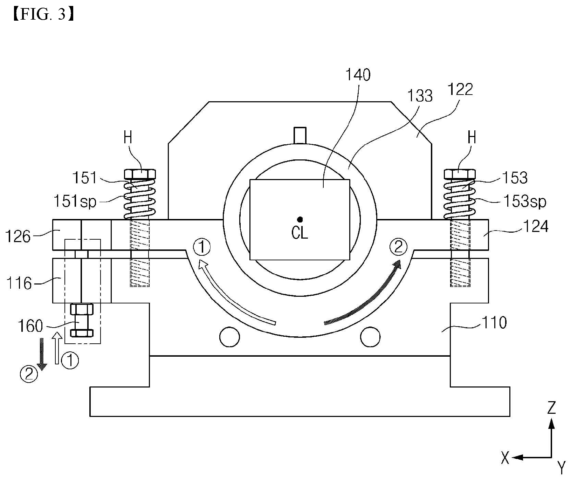

FIG. 3 is a side view of the ultrasonic welding apparatus 100.

Referring to FIGS. 2 and 3, a first compression spring 151sp may be provided between a head part H of the first bolt 151 and the adjustment part housing 120. Also, a second compression spring 153sp may be provided between a head part H of the second bolt 153 and the adjustment part housing 120.

The first compression spring 151sp may apply a force in a vertical direction (for example, Z-axis direction) to the adjustment part housing 120 between the head part H of the first bolt 151 and the adjustment part housing 120. Since the first bolt 151 is fastened to the support 110, the head part H of the first bolt 151 receives force from the first compression spring 151sp but does not move in the vertical direction by the force. Meanwhile, the adjustment part housing 120 receives force from the first compression spring 151sp and can move by the force.

The second compression spring 153sp may apply a force in a vertical direction (for example, Z-axis direction) to the adjustment part housing 120 between the head part H of the second bolt 153 and the adjustment part housing 120. Since the second bolt 153 is fastened to the support 110, the head part H of the second bolt 153 receives force from the second compression spring 153sp but does not move in the vertical direction by the force. Meanwhile, the adjustment part housing 120 receives force from the second compression spring 153sp and may move by the force.

In some embodiments, the spring constant of the first compression spring 151sp may be the same as the spring constant of the second compression spring 153sp.

In other embodiments, the spring constant of the first compression spring 151sp may be different from the spring constant of the second compression spring 153sp. In some embodiments, the first compression spring 151sp may have a larger spring constant compared to the second compression spring 153sp. Therefore, the force required for the first compression spring 151sp to compress the same length is greater than the force required for the second compression spring 153sp. Because the spring constant of the first compression spring 151sp is larger compared to the second compression spring 153sp, the adjustment part housing 120 may receive force in a counterclockwise direction (in other words, direction of 2) based on the drawing shown in FIG. 3.

The ultrasonic welding apparatus 100 may further include an adjustment bolt 160 that penetrates the support 110 and contacts the adjustment part housing 120. In some embodiments, the adjustment bolt 160 may contact a lower surface of a housing protrusion part 126 of the adjustment part housing 120. In some embodiments, the support 110 has a support protrusion part 116 corresponding to the housing protrusion part 126, and the adjustment bolt 160 may penetrate the support protrusion part 116 and contact the housing protrusion part 126.

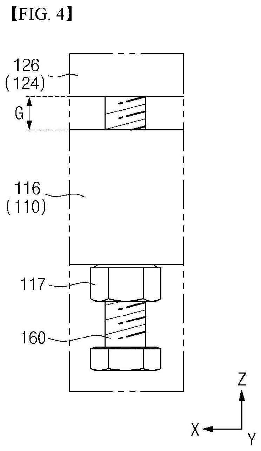

FIG. 4 is a partial enlarged view of portion A of FIG. 3.

Referring to FIGS. 3 and 4, the adjustment bolt 160 may be advanced or withdrawn in a vertical direction (for example, Z-axis direction) by rotation. The adjustment bolt 160 may be configured to move in a direction that compresses the first compression spring 151sp by rotation in one direction. Also, the adjustment bolt 160 may be configured to move in a direction that relaxes the first compression spring 151sp by rotation in the opposite direction.

Specifically, when the adjustment bolt 160 advances in the vertical direction by rotation (in other words, direction of 1), that is, when it rises in the +Z direction of FIG. 3, the housing protrusion part 126 in contact with the adjustment bolt 160 receives force upward and the adjustment part housing 120 rises upward. Thereby, a spacing G between the adjustment part housing 120 and the support 110 increases, and the first compression spring 151sp may be compressed. Because the housing protrusion part 126 receives force upward, the adjustment part housing 120 may be rotated by a predetermined angle in a clockwise direction as a whole with respect to the rotation axis.

Conversely, when the adjustment bolt 160 is withdrawn in the vertical direction by rotation (in other words, direction of 2), that is, when it descends in the -Z direction of FIG. 3, the housing protrusion part 126 receives force downward by the first compression spring 151sp and the adjustment part housing 120 descends downward. Thereby, the spacing G between the adjustment part housing 120 and the support 110 decreases, and the first compression spring 151sp may be relaxed. Because the housing protrusion part 126 receives force downward, the adjustment part housing 120 may be rotated by a predetermined angle in a counterclockwise direction as a whole with respect to the rotation axis CL.

Therefore, by adjusting the advance and withdrawal of the adjustment bolt 160 in the vertical direction, the adjustment part housing 120 may be rotated by a predetermined angle in a clockwise or counterclockwise direction. Thereby, it is possible to adjust the horizontal position of the horn 140.

The adjustment bolt 160 may be threadedly engaged to a support nut part 117 so that the adjustment bolt 160 can be advanced or withdrawn in the vertical direction by rotation. The support nut part 117 may be a part of the support 110. In FIG. 4, the support nut part 117 is shown as exposed to the outside, but the support nut part 117 may be provided on an inner surface of a through hole of the support 110 through which the adjustment bolt 160 passes.

### (second embodiment)

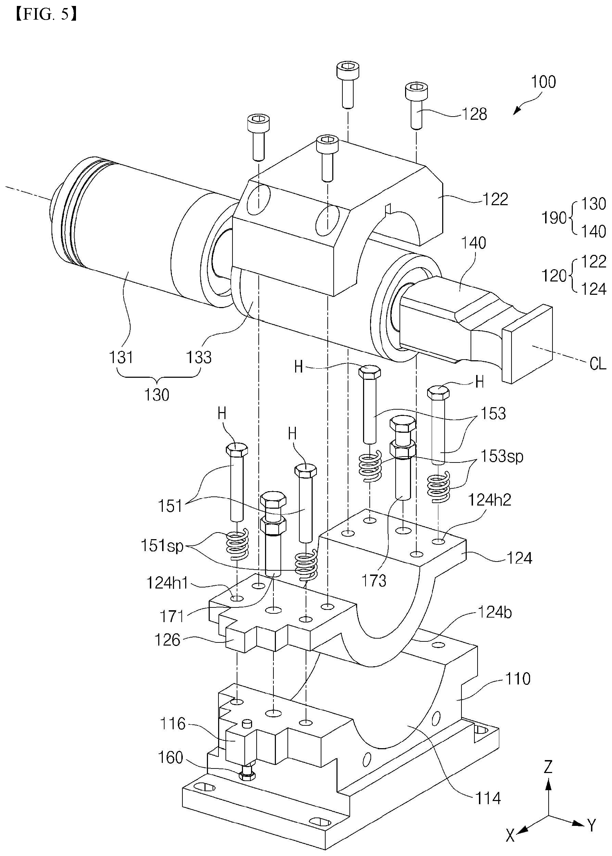

FIG. 5 is an exploded perspective view illustrating a major part of an ultrasonic welding apparatus 100 according to another embodiment of the present disclosure. The embodiment shown in FIG. 5 is substantially the same as the embodiment shown in FIGS. 1 to 3 except that it further includes stoppers 171, 173. Therefore, the following description will focus on these differences.

Referring to FIG. 5, a first stopper 171 may be provided adjacent to the first bolts 151.

In some embodiments, the first stopper 171 may be coupled to the support 110 by penetrating the adjustment part housing 120 from one side of the adjustment part housing 120. Also, the first stopper 171 may suppress the adjustment part housing 120 from being lifted upward. In FIG. 5, the first stopper 171 is shown as including one bolt and one nut, but the present disclosure is not limited thereto. The first stopper 171 may comprise one bolt, or other configurations that act as a stopper in the art may be adopted.

When performing welding with the ultrasonic welding apparatus 100, the horn 140 may apply a predetermined pressure to the workpiece. As a reaction to the pressure, the horn 140 and the adjustment part housing 120 surrounding it may receive force upward, whereby the adjustment part housing 120 may be lifted from the support 110. The first stopper 171 may serve to limit movement of the adjustment part housing 120 such that the horn 140 and the adjustment part housing 120 are not lifted from the support 110.

The first stopper 171 may be provided on the adjustment part housing 120 and the support 110 after securing the horizontal position of the horn 140.

In some embodiments, a second stopper 173 may be further provided adjacent to the second bolts 153.

The second stopper 173 may be coupled to the support 110 by penetrating the adjustment part housing 120 from the other side of the adjustment part housing 120. Also, the second stopper 173 may suppress the adjustment part housing 120 from being lifted upward. In FIG. 5, the second stopper 173 is shown as including one bolt and one nut, but the present disclosure is not limited thereto. The second stopper 173 may comprise one bolt, or other configurations that act as a stopper in the art may be adopted.

The second stopper 173 may perform the same action as the first stopper 171. In other words, the second stopper 173 may serve to limit movement of the adjustment part housing 120 so that the horn 140 and the adjustment part housing 120 are not lifted from the support 110.

The second stopper 173 may be provided on the adjustment part housing 120 and the support 110 after securing the horizontal position of the horn 140.

The ultrasonic welding apparatus 100 described above can easily and precisely adjust the horizontal position of the horn relative to the anvil, thereby significantly improving welding quality.

As above, although embodiments of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of embodiments of the present disclosure will not depart from the technology of the present disclosure.

### [Description of Reference Numerals]

100: ultrasonic welding apparatus
110: support
114: concave part
116: support protrusion part
120: adjustment part housing
122: upper housing
124: lower housing
124h1: first through hole
124h2: second through hole
126: housing protrusion part
130: vibration generator
131: vibrator
133: booster
140: horn
151: first bolt
151sp: first compression spring
153: second bolt
153sp: second compression spring
160: adjustment bolt
180: anvil
181: anvil base
190: ultrasonic stack

## Claims

1. An ultrasonic welding apparatus, comprising:
a support having a concave part;
an ultrasonic stack provided on the support; and
an adjustment part housing surrounding the ultrasonic stack and seated in the concave part,
wherein the support and the adjustment part housing are configured such that a spacing therebetween is adjustable at one side.

2. The ultrasonic welding apparatus of claim 1, wherein the adjustment part housing comprises a lower housing and an upper housing, and
wherein the lower housing and the upper housing are configured to cooperate with each other to surround side surfaces of the ultrasonic stack.

3. The ultrasonic welding apparatus of claim 2, wherein the lower housing comprises a lower surface corresponding to a concave surface of the concave part of the support.

4. The ultrasonic welding apparatus of claim 2, wherein the upper housing and the lower housing are fastened by housing fastening bolts.

5. The ultrasonic welding apparatus of claim 1, wherein the adjustment part housing is configured to rotate with respect to a rotation axis by adjusting the spacing between the support and the adjustment part housing.

6. The ultrasonic welding apparatus of claim 5, wherein the rotation axis is substantially parallel to an extension direction of the ultrasonic stack.

7. The ultrasonic welding apparatus of claim 1, wherein the adjustment part housing comprises through holes respectively provided on both sides of the adjustment part housing with the ultrasonic stack therebetween, and
further comprising a first bolt fastened to the support by penetrating the through hole provided in the adjustment part housing at one side of the ultrasonic stack and a second bolt fastened to the support by penetrating the through hole provided in the adjustment part housing at the other side of the ultrasonic stack.

8. The ultrasonic welding apparatus of claim 7, wherein a first compression spring is interposed between a head part of the first bolt and the adjustment part housing, and a second compression spring is interposed between a head part of the second bolt and the adjustment part housing.

9. The ultrasonic welding apparatus of claim 8, wherein a spring constant of the first compression spring and a spring constant of the second compression spring are different from each other.

10. The ultrasonic welding apparatus of claim 9, wherein the spring constant of the first compression spring is greater than the spring constant of the second compression spring.

11. The ultrasonic welding apparatus of claim 8, further comprising an adjustment bolt capable of contacting the adjustment part housing while penetrating the support.

12. The ultrasonic welding apparatus of claim 11, wherein the adjustment bolt is configured to be capable of advancing in a direction that compresses the first compression spring by its own rotation.

13. An ultrasonic welding apparatus, comprising:
an ultrasonic stack;
an adjustment part housing surrounding the ultrasonic stack and having a housing protrusion part on one side;
a support having a support protrusion part corresponding to the one side of the adjustment part housing and provided to at least partially support the adjustment part housing; and
an adjustment bolt configured to penetrate the support protrusion part and contact the housing protrusion part,
wherein the adjustment bolt is configured to adjust a distance between the support protrusion part and the housing protrusion part.

14. The ultrasonic welding apparatus of claim 13, wherein the adjustment part housing is configured to rotate at a predetermined angle with respect to a rotation axis by advance of the adjustment bolt.

15. The ultrasonic welding apparatus of claim 13, wherein the ultrasonic stack comprises a vibration generator and a horn
